(19) Europäisches Patentamt
European Patent Office
Office européen des brevets

(11) **EP 1 479 303 B1**

(12) **EUROPÄISCHE PATENTSCHRIFT**

(45) Veröffentlichungstag und Bekanntmachung des Hinweises auf die Patenterteilung:
**14.11.2007 Patentblatt 2007/46**

(51) Int Cl.:
***A24C 5/34*** *(2006.01)*

(21) Anmeldenummer: **04011626.1**

(22) Anmeldetag: **15.05.2004**

(54) **Vorrichtung zum Messen des Durchmessers eines stabförmigen Gegenstandes insbesondere der Tabak verarbeitenden Industrie**

Apparatus for measuring the diameter of a rodlike article, especially from the tobacco processing industry

Appareil pour mesurer le diamètre d'un article en forme de tige, notamment de l'industrie du tabac

(84) Benannte Vertragsstaaten:
**AT BE BG CH CY CZ DE DK EE ES FI FR GB GR HU IE IT LI LU MC NL PL PT RO SE SI SK TR**

(30) Priorität: **22.05.2003 DE 10323152**

(43) Veröffentlichungstag der Anmeldung:
**24.11.2004 Patentblatt 2004/48**

(73) Patentinhaber: **Hauni Maschinenbau Aktiengesellschaft**
**21033 Hamburg (DE)**

(72) Erfinder: **Noack, Andreas**
**21423 Drage (DE)**

(74) Vertreter: **Eisenführ, Speiser & Partner**
**Patentanwälte Rechtsanwälte**
**Zippelhaus 5**
**20457 Hamburg (DE)**

(56) Entgegenhaltungen:
| | |
|---|---|
| EP-A- 0 359 664 | EP-A- 0 555 875 |
| EP-A- 0 909 537 | DE-A1- 2 448 651 |
| DE-A1- 2 729 576 | DE-A1- 3 437 753 |
| GB-A- 2 121 956 | US-A- 5 930 734 |

**Beschreibung**

Die Erfindung betrifft eine Vorrichtung zum Messen des Durchmessers mindestens eines stabförmigen Gegenstandes insbesondere der Tabak verarbeitenden Industrie, mit einer optischen Messanordnung, die eine Bestrahlungseinrichtung zum Bestrahlen des stabförmigen Gegenstandes und eine Erfassungseinrichtung zur, vorzugsweise kurzzeitigen, Erfassung der Größe der vom stabförmigen Gegenstand hervorgerufenen Abschattung und Erzeugung von den Durchmesser des stabförmigen Gegenstandes angebenden Signalen aufweist, einer Steuereinrichtung zur Ansteuerung der Bestrahlungseinrichtung und einer Auswerteeinrichtung zur Auswertung der Signale von der Erfassungseinrichtung, wobei die Erfassungseinrichtung mindestens eine Reihe von lichtempfindlichen Sensorelementen, die der Bestrahlungseinrichtung im Wesentlichen gegenüber liegen, aufweist und der stabförmige Gegenstand im zwischen der Bestrahlungseinrichtung und der Erfassungseinrichtung laufenden Strahlengang positionierbar oder durch den Strahlengang führbar ist.

Eine Vorrichtung der eingangs genannten Art ist aus der DE 27 29 576 A1 bekannt. Diese bekannte Vorrichtung ist insbesondere zur Umfangsmessung eines elektrischen Kabels vorgesehen.

Unter dem Begriff "stabförmiger Gegenstand der Tabak verarbeitenden Industrie" werden Zigaretten mit und ohne Filter, Filterstäbe, Zigarillos, Zigarren und sonstige Rauchstäbe verstanden, und zwar unabhängig davon, in welchem Produktionsschritt sich diese Gegenstände befinden. Ferner umfasst der Begriff "stabförmiger Gegenstand" auch einen Endlosstrang, der in einem bestimmten Produktionsschritt als ganzes oder als bereits zerteiltes Strangstück, beispielsweise zur Herstellung der zuvor erwähnten Rauchartikel, vorliegt.

Insbesondere bei der Herstellung von Zigaretten und Filtern ist der Durchmesser ein wesentliches Qualitätsmerkmal, das bei der Herstellung zu überwachen ist. Dabei werden gewöhnlich die stabförmigen Gegenstände in Längsrichtung, also in Richtung ihrer Längsachse, kontinuierlich oder diskontinuierlich durch eine Messanordnung transportiert.

Die Schwierigkeiten genauer Messungen des Durchmessers liegen darin, dass die stabförmigen Gegenstände insbesondere der Tabak verarbeitenden Industrie oft 'unrund' sind, also die Querschnitte senkrecht zu den Längsachsen mehr oder weniger von der Kreisform abweichen.

In der EP 0 909 537 A1 ist eine Messvorrichtung bekannt, bei welcher die Bestrahlungseinrichtung einen parallel gebündelten breiten Strahl erzeugt, der an einem Spiegel um 90° auf eine Erfassungseinrichtung reflektiert wird. Der stabförmige Gegenstand erstreckt sich parallel zum Spiegel und rechtwinklig zum Strahlengang und ist dabei so positioniert, dass ein Teil des Strahles direkt von der Bestrahlungseinrichtung auf den stabförmigen Gegenstand und ein anderer Teil des Strahles nach Reflektion am Spiegel auf den stabförmigen Gegenstand trifft, so dass der auf die Erfassungseinrichtung auftreffende Strahl zwei nebeneinander liegende Abschattungsbereiche aufweist, die den Durchmesser in zwei rechtwinkelig zueinander stehenden Querschnittsachsen repräsentieren. Zwar eignet sich diese bekannte Messvorrichtung auch für diejenigen stabförmigen Gegenstände, bei denen eine Drehung um deren Längsachse prozessbedingt nicht erforderlich oder gar nicht gewünscht ist, und somit auch insbesondere für Endlostränge. Jedoch ist eine Messung des Durchmessers in nur zwei Querschnittsachsen in vielen Fällen zu ungenau.

Ferner sind in der DE 195 23 273 A1 ein Verfahren und eine Anordnung zum Messen des Durchmessers eines stabförmigen Gegenstandes der Tabak verarbeitenden Industrie, insbesondere einer Zigarette, beschrieben, wobei der stabförmige Gegenstand während seines Transportes durch eine stationäre Messanordnung gedreht, während der Drehung einer Bestrahlung ausgesetzt, die Größe mindestens einer durch den stabförmigen Gegenstand hervorgerufenen Abschattung der Strahlung entsprechend erfasst und in ein elektrisches Messsignal umgesetzt und aus mehreren solcher Messsignale ein Signal für den Durchmesser des stabförmigen Gegenstandes gebildet wird. Zwar lässt sich mit dieser bekannten Anordnung die Messgenauigkeit erhöhen, jedoch ist diese bekannte Anordnung insbesondere nicht für die Messung des Durchmessers eines Endlosstranges geeignet, bei welchem eine Drehung um seine Längsachse nicht stattfindet.

Es ist Aufgabe der vorliegenden Erfindung, eine Vorrichtung der eingangs genannten Art anzugeben, die mit hoher Messgenauigkeit die Messung von Durchmessern von stabförmigen Gegenständen erlaubt, ohne dass diese stabförmigen Gegenstände um ihre Längsachse gedreht werden müssen, und sich somit insbesondere für die Messung von Durchmessern von Endlossträngen eignet.

Diese Aufgabe wird gelöst durch eine Vorrichtung zum Messen des Durchmessers mindestens eines stabförmigen Gegenstandes insbesondere der Tabak verarbeitenden Industrie, mit einer optischen Messanordnung, die eine Bestrahlungseinrichtung zum Bestrahlen des stabförmigen Gegenstandes und eine Erfassungseinrichtung zur, vorzugsweise kurzzeitigen, Erfassung der Größe der vom stabförmigen Gegenstand hervorgerufenen Abschattung und Erzeugung von den Durchmesser des stabförmigen Gegenstandes angebenden Signalen aufweist, einer Steuereinrichtung zur Ansteuerung der Bestrahlungseinrichtung und einer Auswerteeinrichtung zur Auswertung der Signale von der Erfassungseinrichtung, wobei die Erfassungseinrichtung mindestens eine Reihe von lichtempfindlichen Sensorelementen, die der Bestrahlungseinrichtung im Wesentlichen gegenüber liegen, aufweist und der stabförmige Gegenstand im zwischen der Bestrahlungseinrichtung und der Erfassungseinrichtung laufenden Strahlengang positionierbar oder durch den Strahlengang führbar ist, dadurch gekennzeichnet, dass die Bestrahlungseinrichtung mindestens eine Reihe von Leuchtkörpern aufweist, die Steuereinrichtung jeweils ein zusammenhängendes Segment von Leuchtkörpern aktiviert und die Auswerteeinrichtung mit Hilfe der Signale von den vom stabförmigen Gegenstand abgeschatteten Sensorelementen den Istdurchmesser des stabförmigen Gegenstandes ermittelt.

Die mit der Erfindung verbundenen Vorteile bestehen insbesondere darin, dass der Durchmesser des stabförmigen Gegenstandes durch die Verwendung einer Vielzahl von in einer Reihe angeordneten Leuchtkörpern und einer Vielzahl von in einer Reihe angeordneten Sensorelementen genau, insbesondere auch bei unrunden stabförmigen Gegenständen, ermittelt werden kann, so dass sich die erfindungsgemäße Messung auch für diejenigen stabförmigen Gegenstände, bei denen eine Drehung um deren Längsachse prozessbedingt nicht erforderlich oder gar nicht gewünscht ist, und insbesondere für Endlosstränge eignet. Letzteres hat zur Folge, dass der stabförmige Gegenstand während der Messung bewegungslos verharren kann. Alternativ ist es aber auch denkbar und gerade für eine laufenden Prozess vorteilhaft, den stabförmigen Gegenstand kontinuierlich oder diskontinuierlich in längsaxialer Richtung durch die Messanordnung zu bewegen, wobei während der Produktion der stabförmigen Gegenstände in einem Produktionsschritt ein Endlosstrang vorliegen kann, der als ganzes oder als bereits zerteiltes Strangstück in längsaxialer Richtung durch die Messanordnung bewegt werden kann.

Zweckmäßigerweise ist die Reihe der Leuchtkörper und/oder die Reihe der Sensorelemente gebogen und umgibt mindestens teilweise den stabförmigen Gegenstand in einem Abstand von diesem. Bei einer Weiterbildung dieser Ausführung bildet die Reihe von Leuchtkörpern und/oder die Reihe von Sensorelementen einen zumindest teilkreisförmigen Bogen, in dessen Mittelpunkt etwa der stabförmige Gegenstand positionierbar ist, und vorzugsweise jeweils einen geschlossenen Kreis. Somit bildet die Reihe von Leuchtkörpern und/oder die Reihe von Sensorelementen ein teilringförmiges oder vollständig ringförmiges Array. Eine solche Anordnung hat den Vorteil, dass die Abstände zwischen den Leuchtkörpern einerseits und den in Bezug auf den stabförmigen Gegenstand gegenüberliegenden entsprechenden Sensorelementen andererseits im Wesentlichen gleich ist, wodurch sich eine vorteilhaftere Messung und Auswertung ergibt.

Zur Erzielung einer möglichst hohen Messgenauigkeit sollte die Anzahl der Sensorelemente relativ hoch und dabei gleichzeitig deren jeweilige effektive Breite und somit der Teilung relativ klein sein. Dabei ist es insbesondere denkbar, die Breite der Sensorelemente kleiner als die Breite der Leuchtkörper vorzusehen.

Bei einer Weiterbildung dieser Ausführung entspricht die Länge des aktivierten zusammenhängenden Segmentes von Leuchtkörpern im Wesentlichen einem gewünschten Solldurchmesser des stabförmigen Gegenstandes, so dass die Auswerteeinrichtung mit Hilfe der Signale von den vom stabförmigen Gegenstand abgeschatteten Sensorelementen sowie unter Berücksichtigung des vorgegebenen Sollwertdurchmessers den Istdurchmesser des stabförmigen Gegenstandes ermittelt.

Besonders genaue Messergebnisse lassen sich dadurch erzielen, dass die Auswerteeinrichtung mit Hilfe der Signale von denjenigen Sensorelementen, die nur vom Kernschatten des stabförmigen Gegenstandes bedeckt werden, den Istdurchmesser des stabförmigen Gegenstandes ermittelt. Denn die geometrische Auswertung des Kernschattens ist besonders einfach.

Bei einer weiteren vorteilhaften Weiterbildung der vorgenannten Ausführung steuert die Steuereinrichtung die Leuchtkörper derart an, dass jeweils ein zusammenhängendes Segment von Leuchtkörpern aktiviert wird, welches zur Veränderung der Winkelausrichtung des Strahlenganges gegenüber dem stabförmigen Gegenstand als Lauflicht entlang der Reihe der Leuchtkörper läuft. Diese Ausführung eignet sich insbesondere für eine stationäre Anordnung der Leuchtkörper, was im Übrigen gewöhnlich der Fall ist. Dabei wird die Veränderung der Winkelausrichtung des Strahlenganges gegenüber dem stabförmigen Gegenstand dadurch realisiert, dass die Steuereinrichtung nacheinander zusammenhängende Gruppen von Leuchtkörpern kurzzeitig aktiviert, indem jeweils die nachfolgend aktivierte Gruppe gegenüber der zuvor aktivierten Gruppe um mindestens einen Leuchtkörperabstand versetzt ist, um auf diese Weise das Lauflicht zu erzeugen.

Zweckmäßigerweise ermittelt dabei die Auswerteeinrichtung mit Hilfe der Signale von den vom stabförmigen Gegenstand abgeschatteten Sensorelementen den Grad der Unrundheit des stabförmigen Gegenstandes.

Dadurch dass bei dieser Ausführung eine nahezu unendliche Vielzahl von Messungen des Durchmessers an ein und derselben Stelle eines stabförmigen Gegenstandes möglich sind, lässt sich die Querschnittsform und die 'Unrundheit' sowie auch der minimale und der maximale Durchmesser des stabförmigen Gegenstandes ermitteln. Letzteres ist insbesondere wichtig, um festzustellen, ob sich der Durchmesser noch innerhalb erlaubter Grenzen bewegt. Ferner lässt sich die Erfindung insbesondere vorteilhaft zur Messung von im Querschnitt elliptischen Zigaretten und Filterstücken verwenden, um auf diese Weise jeweils zueinander passenden Filterstücke und Zigarettenstränge zu ermitteln.

Alternativ oder zusätzlich kann die Auswerteeinrichtung einen Mittelwertbildner aufweisen, der einen Mittelwert aus mehreren Durchmesser-Messwerten erzeugt, von denen jeder Messwert den Durchmesser des stabförmigen Gegenstandes bei einer anderer Winkelausrichtung des Strahlenganges angibt. Somit kann aus einer Mehrzahl von Messsignalen der mittlere Durchmesser des stabförmigen Gegenstandes ermittelt werden. Je größer die Anzahl der einzelnen Messungen über den Bereich, innerhalb dessen die Ausrichtung des Strahlenganges verändert wird, gewählt wird, um so genauer kann der mittlere Durchmesserwert ermittelt werden.

Soll der Durchmesser von mindestens zwei stabförmigen Gegenständen gleichzeitig gemessen werden, sollten mindestens zwei, vorzugsweise im Wesentlichen nebeneinanderliegende, optische Messanordnungen vorzusehen, von denen jede Messanordnung zur Messung des Durchmessers eines stabförmigen Gegenstandes vorgesehen sein. Eine solche Ausführung lässt sich insbesondere vorteilhaft in einer Zweistrangmaschine einsetzen.

Damit die Messergebnisse der Sensorelemente nicht durch unerwünschtes Streulicht von benachbarten Leuchtkörpern verfälscht wird, sollten die Leuchtkörper von benachbarten Sensorelementen durch eine Blende optisch getrennt sein, welche vorzugsweise als zwischen der Reihe der Leuchtkörper und der Reihe der Sensorelemente angeordnete Lochblende mit einer Öffnung ausgebildet sein kann, in der der stabförmige Gegenstand positionierbar ist.

Schließlich sollte zweckmäßigerweise der Strahlengang im Wesentlichen rechtwinkelig zur Längserstreckung des stabförmigen Gegenstandes ausgerichtet sein.

Weitere bevorzugte Ausführungen der Erfindung sind in den abhängigen Ansprüchen angegeben.

Nachfolgend wird ein bevorzugtes Ausführungsbeispiel der Erfindung anhand der beiliegenden Zeichnungen näher erläutert. Es zeigen:

Fig. 1    in schematischer perspektivischer Ansicht eine Zigarettenstrangmaschine, in der die wesentlichen Bauteile sichtbar dargestellt sind;

Fig. 2    schematisch in Draufsicht eine bevorzugte Ausführung einer in der Zigarettenstrangmaschine von Figur 1 verwendeten optischen Messanordnung mit ihren wesentlichen Komponenten (Figur 2a) und beispielhaft den Verlauf der von dieser Messanordnung ausgegebenen Signale (Figur 2b); und

Fig. 3    schematisch in Seitenansicht die optische Messanordnung gemäß Figur 2.

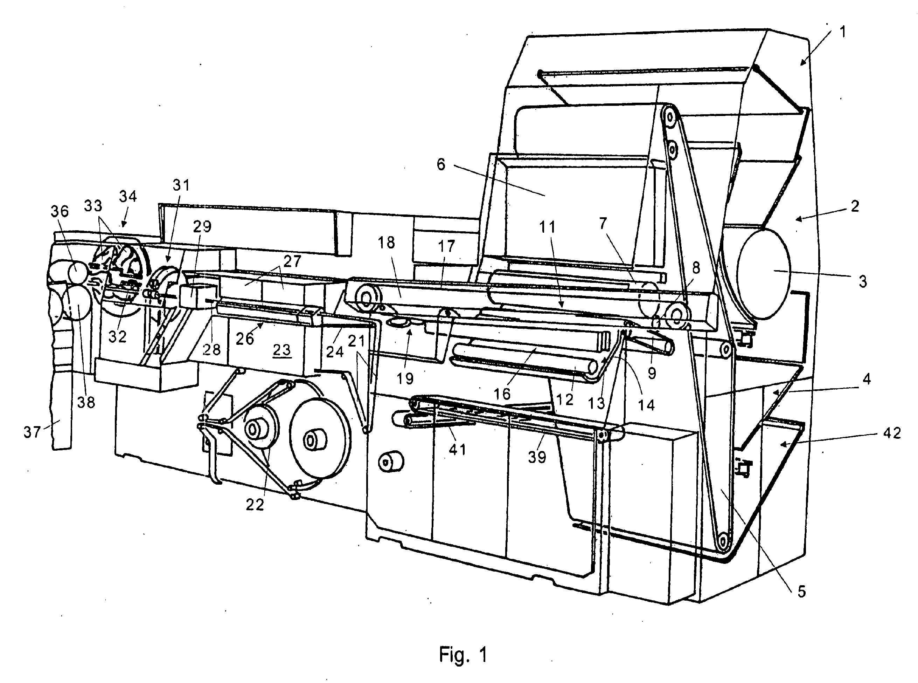

In Fig. 1 ist in schematischer perspektivischer Ansicht eine Zigarettenstrangmaschine vom Typ "PROTOS" der Anmelderin gezeigt, in welcher die wesentlichen Bauteile sichtbar dargestellt sind. Von dieser Zigarettenstrangmaschine werden nachfolgend der Aufbau und die Funktion kurz beschrieben.

Von einer Schleuse 1 wird ein Vorverteiler 2 portionsweise mit Tabak beschickt. Eine Entnahmewalze 3 des Vorverteilers 2 ergänzt gesteuert einen Vorratsbehälter 4 mit Tabak, aus dem ein Steilförderer 5 Tabak entnimmt, der einen Stauschacht 6 gesteuert beschickt. Aus dem Stauschacht 6 entnimmt eine Stiftwalze 7 einen gleichförmigen Tabakstrom, der von einer Ausschlagwalze 8 aus den Stiften der Stiftwalze 7 herausgeschlagen und auf ein mit konstanter Geschwindigkeit umlaufendes Streutuch 9 geschleudert wird.

Ein so auf dem Streutuch 9 gebildetes Tabakvlies wird in eine Sichteinrichtung 11 geschleudert, die im wesentlichen aus einem Luftvorhang besteht, den größere bzw. schwere Tabakteile passieren, während alle anderen Tabakteilchen von der Luft in einen von einer Stiftwalze 12 und einer Wand 13 gebildeten Trichter 14 gelenkt werden. Von der Stiftwalze 12 wird der Tabak in einen Tabakkanal 16 gegen einen Strangförderer 17 geschleudert, an dem der Tabak mittels in eine Unterdruckkammer 18 gesaugter Luft gehalten und ein Tabakstrang aufgeschauert wird.

Ein Egalisator 19 entfernt überschüssigen Tabak von dem Tabakstrang, der dann auf einem im Gleichlauf geführten Zigarettenpapierstreifen 21 gelegt wird. Der Zigarettenpapierstreifen 21 wird von einer Bobine 22 abgezogen, durch ein Druckwerk 23 geführt und auf ein angetriebenes Formatband 24 gelegt. Das Formatband 24 transportiert den Tabakstrang und den Zigarettenpapierstreifen 21 durch ein Format 26, in dem der Zigarettenpapierstreifen 21 um den Tabakstrang gefaltet wird, so dass noch eine Kante absteht, die von einem nicht dargestellten Leimapparat in bekannter Weise beleimt wird. Darauf wird die Klebnaht geschlossen und von einer Tandemnahtplätte 27 getrocknet.

Ein so gebildeter Zigarettenstrang 28 durchläuft eine Mess- und Regelungseinheit 29, und wird von einem Messeraparat 31 in doppeltlange Zigaretten 32 geschnitten. Die doppeltlangen Zigaretten 32 werden von einer gesteuerte Arme 33 aufweisenden Übergabevorrichtung 34 auf eine Übernahmetrommel 36 in einer Filteransetzmaschine 37 übergeben, auf deren Schneidtrommel 38 sie mit einem Kreismesser in Einzelzigaretten geteilt werden.

Förderbänder 39, 41 fördern überschüssigen Tabak in einen unter dem Vorratsbehälter 4 angeordneten Behälter 42, aus dem der rückgeführte Tabak von dem Steilförderer 5 wieder entnommen wird.

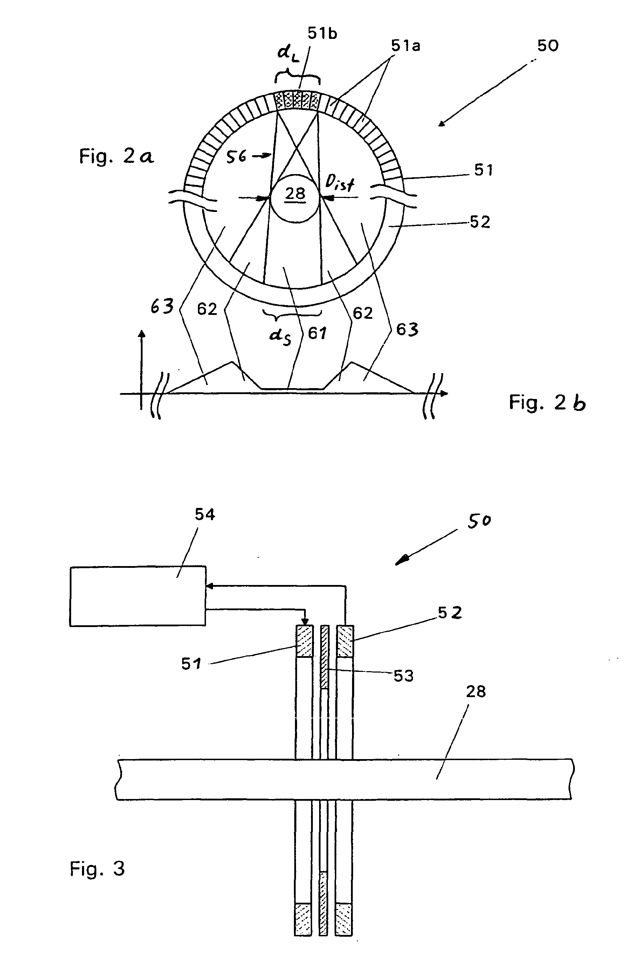

Die in der Zigarettenstrangmaschine von Fig. 1 enthaltene Mess- und Regelungseinheit 29 weist eine optische Messanordnung 50 auf, die mit ihren wesentlichen Komponenten schematisch in den Figuren 2a und 3 dargestellt ist.

Die optische Messanordnung 50 weist ein ringförmiges LED-Array 51 auf, das aus einer Vielzahl von nebeneinanderliegenden einzelnen Leuchtdioden 51a besteht. Das ringförmige LED-Array 51 kann beispielsweise aus 4096 Leuchtdioden bestehen. Selbstverständlich können anstelle von Leuchtdioden auch andere Leuchtkörper verwendet werden. Wie Figur 2a erkennen lässt, sind die Leuchtdioden 51a direkt aneinanderliegend zur Bildung des ringförmigen LED-Arrays 51 nebeneinander angeordnet und haben, in Umfangsrichtung betrachtet, jeweils dieselbe Breite. Koaxial zum ringförmigen LED-Array 51 und in einem Abstand von diesem ist ein ringförmiges CCD-Array 52 angeordnet, dass aus Charged-Coupled-Device-Elementen besteht. Das ringförmige CCD-Array 52 kann beispielsweise ebenfalls aus 4096 CCD-Pixeln bestehen. Selbstverständlich können auch anstelle von CCD-Elementen andere optische Sensorelemente verwendet werden. Auch wenn in den Figuren nicht erkennbar, können die CCD-Elemente des ringförmigen CCD-Arrays 52 hinsichtlich Teilung und Ausrichtung mit den Leuchtdioden 51a des ringförmigen LED-Arrays 51 übereinstimmen. Um eine hohe Messgenauigkeit zu erzielen, sollte auf jeden Fall das CCD-Array 52 eine hohe Anzahl von CCD-Elementen mit jeweils geringer effektiver Breite aufweisen. Demgegenüber kann bei Bedarf die Anzahl der Leuchtdioden 51 a geringer sein. Im vorliegenden Ausführungsbeispiel sind das ringförmige LED-Array 51 und das ringförmige CCD-Array 52 jeweils stationär angeordnet und bilden jeweils einen Vollring.

Wie ferner Figur 3 erkennen lässt, ist zwischen dem ringförmigen LED-Array 51 und dem ringförmigen CCD-Array 52 eine ringförmige Blende 53 angeordnet und koaxial zu den ringförmigen Arrays 51 und 52 ausgerichtet. Die ringförmige Blende 53 trennt optisch die CCD-Elemente des ringförmigen CCD-Array 52 von den jeweils benachbarten Leuchtdioden 51 a des ringförmigen LED-Array 51. Denn, wie Figur 2a erkennen lässt, sollen die von den Leuchtdioden 51a des ringförmigen LED-Array 51 erzeugten Lichtstrahlen nicht auf die direkt benachbarten CCD-Elemente des ringförmigen CCD-Array 52, sondern auf die in Bezug auf den Mittelpunkt der ringförmigen Array 51, 52 gegenüberliegenden CCD-Elemente des ringförmigen CCD-Array 52 gerichtet werden.

Der Zigarettenstrang 28 wird durch die ringförmigen Arrays 51, 52 und die ringförmige Blende 53 geführt und ist im dargestellten Ausführungsbeispiel koaxial zu den ringförmigen Arrays 51, 52 und der ringförmigen Blende 53 ausgerichtet. Somit ist der Zigarettenstrang 28 rechtwinkelig zu den Arrays 51, 52 und der ringförmigen Blende 53 angeordnet, was zur Folge hat, dass die von den Leuchtdioden 51 a des ringförmigen LED-Array 51 erzeugten Lichtstrahlen 56 in einem Winkel, der in der Praxis gewöhnlich ein wenig kleiner als der rechte Winkel ist, und somit nahezu rechtwinkelig auf den Zigarettenstrang 28 bzw. die gegenüberliegenden CCD-Elemente des ringförmigen CCD-Arrays 52 auftreffen.

Wie Figur 3 ferner erkennen lässt, weist die optische Messanordnung 50 noch eine Steuerungs- und Auswerteeinheit 54 auf, die die Leuchtdioden 51 a des ringförmigen LED-Array 51 ansteuert und dadurch aktiviert und die Signale von den CCD-Elementen des ringförmigen CCD-Array 52 empfängt und entsprechend auswertet.

Dabei werden die Leuchtdioden 51a des ringförmigen LED-Array 51 so angesteuert, dass ein Segment 51 b (vgl. Figur 2a) aus mehreren zusammenhängenden aktivierten Leuchtdioden 51 a gebildet wird, das als Lauflicht entlang des ringförmigen LED-Array 51 und somit um den Zigarettenstrang 28 herum läuft. Das aktivierte Segment 51 b kann als Lauflicht nahezu beliebig schnell bewegt werden, da bewegte mechanische Komponenten nicht vorhanden sind. Somit kann der Durchmesser in jeder Richtung ohne bewegliche Teile gemessen werden.

Gewöhnlich soll die Breite $d_L$ des aktivierten Segmentes 51 b etwa dem gewünschten Solldurchmesser des Zigarettenstranges entsprechen. Durch die abschattende Wirkung des Zigarettenstranges 28 wird auf dem ringförmigen CCD-Array 52 an der dem aktivierten Segment 51 b diametral gegenüberliegenden Stelle ein Kernschatten 61 gebildet, der von den CCD-Elementen des ringförmigen CCD-Array 52 erfasst wird. Beiderseits des Kernschattens 61 entstehen ferner Halbschatten 62, während außerhalb der Halbschatten 62 Streulicht 63 auf das ringförmige CCD-Array 52 trifft. Die Helligkeitsverteilung des auf die CCD-Elemente auftreffenden Lichtes in Richtung des Umfanges des relevanten Abschnittes des CCD-Array 52 ist in Figur 2b schematisch gezeigt.

Im dargestellten Ausführungsbeispiel errechnet sich die Breite $d_S$ des Kernschattens 61 unter Berücksichtigung von $d_L$ und des Istdurchmessers $D_{ist}$ des Zigarettenstranges 28 wie folgt:

$$d = d_L + 2 \times (D_{ist} - d_L) = 2 D_{ist} - d_L \tag{1}$$

Daraus lässt sich dann der gemessene Istdurchmesser wie folgt ermitteln:

$$D_{ist} = (d_S - D_L) / 2 \tag{2}$$

Will man mit einer einzigen Messung auskommen, um den Istdurchmesser zu ermitteln, ist darauf zu achten, dass der Zigarettenstrang 28 möglichst exakt durch die Mitte der ringförmigen Arrays 51, 52 läuft, so dass die Längsachse des Zigarettenstranges 28 mit der gemeinsamen Mittelpunktsachse der beiden Arrays 51, 52 im Wesentlichen zusammenfällt. Sollte dies demgegenüber nicht möglich sein, sind mehrere Messungen unter unterschiedlicher Winkelausrichtung der Lichtstrahlen 56, mindestens jedoch zwei Messungen mit um 180° entgegengesetzter Ausrichtung der Lichtstrahlen 56 erforderlich. In Abhängigkeit von der Anzahl der Winkeländerungen der Lichtstrahlen 56 in Bezug auf den Zigarettenstrang 28, welche durch das als Lauflicht umlaufende aktivierte Segment 51 b entstehen, wird in der Steuerungs- und Auswerteeinheit 54 eine entsprechende Anzahl von Durchmesserwerten errechnet. Diese Durchmesserwerte werden anschließend in der Steuerungs- und Auswerteeinheit 54 gemittelt, wodurch der mittlere Durchmesser angegeben werden kann. Hierzu weist die Steuerungs- und Auswerteeinheit 54 einen im einzelnen nicht dargestellten Mittelwertbildner auf.

Ferner kann in der Steuerungs- und Auswerteeinheit 54 durch eine entsprechende Auswertung der Signale vom ringförmigen CCD-Array 52 aus mehreren Messwerten auch die Unrundheit des Zigarettenstranges 28 ermittelt werden.

Die zuvor beschriebene Messanordnung 50 kann beispielsweise auch in einer Zweistrangmaschine verwendet werden, wozu dann zwei solcher Messanordnungen 50 vorzusehen sind, die vorzugsweise nebeneinander oder in direkter Nachbarschaft angeordnet werden.

**Patentansprüche**

1. Vorrichtung zum Messen des Durchmessers mindestens eines stabförmigen Gegenstandes (28) insbesondere der Tabak verarbeitenden Industrie, mit einer optischen Messanordnung (50), die eine Bestrahlungseinrichtung (51) zum Bestrahlen des stabförmigen Gegenstandes (28) und eine Erfassungseinrichtung (52) zur, vorzugsweise kurzzeitigen, Erfassung der Größe (ds) der vom stabförmigen Gegenstand (28) hervorgerufenen Abschattung und Erzeugung von den Durchmesser ($D_{ist}$) des stabförmigen Gegenstandes (28) angebenden Signalen aufweist, einer Steuereinrichtung (54) zur Ansteuerung der Bestrahlungseinrichtung (51) und einer Auswerteeinrichtung (54) zur Auswertung der Signale von der Erfassungseinrichtung (52), wobei die Erfassungseinrichtung (52) mindestens eine Reihe von lichtempfindlichen Sensorelementen, die der Bestrahlungseinrichtung (51) im Wesentlichen gegenüber liegen, aufweist und der stabförmige Gegenstand (28) im zwischen der Bestrahlungseinrichtung (51) und der Erfassungseinrichtung (52) laufenden Strahlengang (56) positionierbar oder durch den Strahlengang (56) führbar ist, **dadurch gekennzeichnet, dass** die Bestrahlungseinrichtung (51) mindestens eine Reihe von Leuchtkörpern (51a) aufweist, die Steuereinrichtung (54) jeweils ein zusammenhängendes Segment (51 b) von Leuchtkörpern (51 a) aktiviert und die Auswerteeinrichtung (54) mit Hilfe der Signale von den vom stabförmigen Gegenstand (28) abgeschatteten Sensorelementen den Istdurchmesser ($D_{ist}$) des stabförmigen Gegenstandes (28) ermittelt.

2. Vorrichtung nach Anspruch 1, **dadurch gekennzeichnet, dass** die Reihe der Leuchtkörper (51a) und/oder die Reihe Sensorelemente gebogen ist und mindestens teilweise den stabförmigen Gegenstand (28) in einem Abstand umgibt.

3. Vorrichtung nach Anspruch 2, **dadurch gekennzeichnet, dass** die Reihe von Leuchtkörpern (51a) und/oder die Reihe von Sensorelementen einen zumindest teilkreisförmigen Bogen bildet, in dessen Mittelpunkt etwa der stabförmige Gegenstand (28) positionierbar ist.

4. Vorrichtung nach Anspruch 3, **dadurch gekennzeichnet, dass** die Reihe von Leuchtkörpern (51a) und/oder die Reihe von Sensorelementen jeweils einen geschlossenen Kreis (51; 52) bildet.

5. Vorrichtung nach mindestens einem der vorangegangenen Ansprüche, **dadurch gekennzeichnet, dass** die Breite der Sensorelemente kleiner als die Breite der Leuchtkörper (51 a) ist.

6. Vorrichtung nach mindestens einem der vorangegangenen Ansprüche, **dadurch gekennzeichnet, dass** die Steuereinrichtung (54) jeweils ein zusammenhängendes Segment (51 b) von Leuchtkörpern (51a) aktiviert, dessen Länge einem vorgegebenen Solldurchmesser ($D_{soli}$) des stabförmigen Gegenstandes (28) im Wesentlichen entspricht, und die Auswerteeinrichtung (54) mit Hilfe der Signale von den vom stabförmigen Gegenstand (28) abgeschatteten Sensorelementen sowie unter Berücksichtigung des vorgegebenen Sollwertdurchmessers ($D_{soli}$) den Istdurchmesser ($D_{ist}$) des stabförmigen Gegenstandes ermittelt.

7. Vorrichtung nach mindestens einem der vorangegangenen Ansprüche, **dadurch gekennzeichnet, dass** die Auswerteeinrichtung (54) mit Hilfe der Signale von denjenigen Sensorelementen, die nur vom Kernschatten (61) des stabförmigen Gegenstandes (28) bedeckt werden, den Istdurchmesser ($D_{ist}$) des stabförmigen Gegenstandes (28) ermittelt.

8. Vorrichtung nach mindestens einem der vorangegangenen Ansprüche, **dadurch gekennzeichnet, dass** die Steuereinrichtung (54) die Leuchtkörper (51 a) derart ansteuert, dass jeweils ein zusammenhängendes Segment (51 b) von Leuchtkörpern (51 a) aktiviert wird, welches zur Veränderung der Winkelausrichtung des Strahlenganges (56) gegenüber dem stabförmigen Gegenstand (28) als Lauflicht entlang der Reihe (51) der Leuchtkörper (51 a) läuft.

9. Vorrichtung nach Anspruch 8,
**dadurch gekennzeichnet, dass** die Auswerteeinrichtung (54) mit Hilfe der Signale von den vom stabförmigen Gegenstand (28) abgeschatteten Sensorelementen den Grad der Unrundheit des stabförmigen Gegenstandes (28) ermittelt.

10. Vorrichtung nach Anspruch 8 oder 9,
**dadurch gekennzeichnet, dass** die Auswerteeinrichtung (54) einen Mittelwertbildner aufweist, der einen Mittelwert aus mehreren Durchmesser-Messwerten erzeugt, von denen jeder Messwert den Durchmesser ($D_{ist}$) des stabförmigen Gegenstandes (28) bei einer anderen Winkelausrichtung des Strahlenganges angibt.

11. Vorrichtung nach mindestens einem der Ansprüche 8 bis 10 zum gleichzeitigen Messen des Durchmessers von mindestens zwei stabförmigen Gegenständen, mit mindestens zwei, vorzugsweise im Wesentlichen nebeneinanderliegenden, optischen Messanordnungen, von denen jede Messanordnung zur Messung des Durchmessers eines stabförmigen Gegenstandes vorgesehen ist.

12. Vorrichtung nach mindestens einem der vorangegangenen Ansprüche,
**dadurch gekennzeichnet, dass** die Leuchtkörper (51a) von benachbarten Sensorelementen durch eine Blende (53) optisch getrennt sind.

13. Vorrichtung nach Anspruch 4 und Anspruch 12,
**dadurch gekennzeichnet, dass** die Blende als zwischen der Reihe (51) der Leuchtkörper (51a) und der Reihe (52) der Sensorelemente angeordnete Lochblende (53) mit einer Öffnung ausgebildet ist, in der der stabförmige Gegenstand (28) positionierbar ist.

14. Vorrichtung nach mindestens einem der vorangegangenen Ansprüche,
**dadurch gekennzeichnet, dass** der Strahlengang (56) im Wesentlichen rechtwinklig zur Längserstreckung des stabförmigen Gegenstandes (28) ausgerichtet ist.

15. Vorrichtung nach mindestens einem der vorangegangenen Ansprüche,
**dadurch gekennzeichnet, dass** die Leuchtkörper (51a) Leuchtdioden sind.

16. Vorrichtung nach mindestens einem der vorangegangenen Ansprüche,
**dadurch gekennzeichnet, dass** die lichtempfindlichen Sensorelemente Charged-Coupled-Device-Elemente sind.

**Claims**

1. Apparatus for measuring the diameter of at least one rod-shaped article (28) in particular of the tobacco processing industry, having an optical measuring arrangement (50) which has an irradiation device (51) for irradiating the rod-shaped article (28) and a detection device (52) for the, preferably short-time, detection of the size (ds) of the shadowing caused by the rod-shaped article (28) and generation of signals indicating the diameter ($D_{actual}$) of the rod-shaped article (28), having a control device (54) for controlling the irradiation device (51) and an evaluation device (54) for evaluating the signals from the detection device (52), the detection device (52) having at least one row of light-sensitive sensor elements which are substantially opposite the irradiation device (51), and it being possible for the rod-shaped article (28) to be positioned in the ray path (56) running between the irradiation device (51) and the detection device (52) or be guided through the ray path (56),
**characterised in that** the irradiation device (51) has at least one row of light-emitting elements (51a), the control device (54) activates in each case a continuous segment (51b) of light-emitting elements (51a) and the evaluation device (54) determines the actual diameter ($D_{actual}$) of the rod-shaped article (28) with the aid of the signals from the sensor elements shadowed by the rod-shaped article (28).

2. Apparatus according to Claim 1,
**characterised in that** the row of light-emitting elements (51a) and/or the row of sensor elements is curved and at least partly surrounds the rod-shaped article (28) at a distance.

3. Apparatus according to Claim 2,
**characterised in that** the row of light-emitting elements (51a) and/or the row of sensor elements forms an at least part-circle-shaped arc, at approximately the centre of which the rod-shaped article (28) can be positioned.

4. Apparatus according to Claim 3,
**characterised in that** the row of light-emitting elements (51a) and/or the row of sensor elements each forms a closed circle (51; 52).

5. Apparatus according to at least one of the preceding claims,
**characterised in that** the width of the sensor elements is less than the width of the light-emitting elements (51a).

6. Apparatus according to at least one of the preceding claims,
**characterised in that** the control device (54) activates in each case a continuous segment (51b) of light-emitting elements (51a), the length of which segment corresponds substantially to a preset nominal diameter ($D_{nominal}$) of the rod-shaped article (28), and the evaluation device (54) determines the actual diameter ($D_{actual}$) of the rod-shaped article with the aid of the signals from the sensor elements shadowed by the rod-shaped article (28) and while taking account of the preset nominal diameter ($D_{nominal}$).

7. Apparatus according to at least one of the preceding claims,
**characterised in that** the evaluation device (54) determines the actual diameter ($D_{actual}$) of the rod-shaped article (28) with the aid of the signals from those sensor elements which are covered only by the complete shadow (61) of the rod-shaped article (28).

8. Apparatus according to at least one of the preceding claims,
**characterised in that** the control device (54) controls the light-emitting elements (51a) in such a way that in each case a continuous segment (51b) of light-emitting elements (51a) is activated, which segment runs as a running light along the row (51) of light-emitting elements (51a) for the purpose of changing the angular orientation of the ray path (56) in relation to the rod-shaped article (28).

9. Apparatus according to Claim 8,
**characterised in that** the evaluation device (54) determines the degree of out-of-roundness of the rod-shaped article (28) with the aid of the signals from the sensor elements shadowed by the rod-shaped article (28).

10. Apparatus according to Claim 8 or 9,
**characterised in that** the evaluation device (54) has an averager which generates an average of a plurality of diameter measured values, each measured value of which indicates the diameter ($D_{actual}$) of the rod-shaped article (28) at a different angular orientation of the ray path.

11. Apparatus according to at least one of Claims 8 to 10 for simultaneously measuring the diameter of at least two rod-shaped articles, having at least two, preferably substantially adjacent, optical measuring arrangements, each measuring arrangement of which is provided for measuring the diameter of a rod-shaped article.

12. Apparatus according to at least one of the preceding claims,
**characterised in that** the light-emitting elements (51a) are optically separated from neighbouring sensor elements by a diaphragm (53).

13. Apparatus according to Claim 4 and Claim 12,
**characterised in that** the diaphragm is formed as an apertured diaphragm which is arranged between the row (51) of light-emitting elements (51a) and the row (52) of sensor elements and has an opening in which the rod-shaped article (28) can be positioned.

14. Apparatus according to at least one of the preceding claims,
**characterised in that** the ray path (56) is oriented substantially at right angles to the longitudinal extent of the rod-shaped article (28).

15. Apparatus according to at least one of the preceding claims,
**characterised in that** the light-emitting elements (51a) are light-emitting diodes.

**16.** Apparatus according to at least one of the preceding claims,
**characterised in that** the light-sensitive sensor elements are charge-coupled device elements.

**Revendications**

**1.** Appareil pour mesurer le diamètre d'au moins un objet en forme de tige (28), en particulier de l'industrie de transformation du tabac, comprenant un système de mesure optique (50) qui présente un dispositif d'émission de rayonnement (51), destiné à émettre un rayonnement sur l'objet en forme de tige (28), et un dispositif de détection (52) destiné à détecter, de préférence instantanément, la taille (ds) de l'ombre produite par l'objet en forme de tige (28) et à générer des signaux indiquant le diamètre ($D_{ist}$) de l'objet en forme de tige (28), un dispositif de commande (54) destiné à exciter le dispositif d'émission de rayonnement (51) et un dispositif d'évaluation (54) destiné à évaluer les signaux issus du dispositif de détection (52), le dispositif de détection (52) présentant au moins une rangée d'éléments formant capteur photosensibles, qui sont situés sensiblement en vis-à-vis du dispositif d'émission de rayonnement (51), et l'objet en forme de tige (28) étant positionnable sur la trajectoire du faisceau de rayonnement (56) se développant entre le dispositif d'émission de rayonnement (51) et le dispositif de détection (52) ou pouvant être dirigé à travers la trajectoire du faisceau de rayonnement (56),
**caractérisé en ce que** le dispositif d'émission de rayonnement (51) présente au moins une rangée de corps éclairants (51a), le dispositif de commande (54) active chaque fois un segment continu (51b) de corps éclairants (51a), et le dispositif d'évaluation (54) détermine le diamètre réel ($D_{ist}$) de l'objet en forme de tige (28) à l'aide des signaux issus des éléments formant capteur se trouvant sous l'ombre de l'objet en forme de tige (28).

**2.** Appareil selon la revendication 1,
**caractérisé en ce que** la rangée des corps éclairants (51a) et/ou la rangée d'éléments formant capteur est incurvée et entoure, au moins partiellement, l'objet en forme de tige (28), à distance de celui-ci.

**3.** Appareil selon la revendication 2,
**caractérisé en ce que** la rangée de corps éclairants (51a) et/ou la rangée d'éléments formant capteur définit un arc au moins partiellement circulaire, au centre duquel, approximativement, peut être positionné l'objet en forme de tige (28).

**4.** Appareil selon la revendication 3,
**caractérisé en ce que** la rangée de corps éclairants (51a) et/ou la rangée d'éléments formant capteur définit respectivement un cercle fermé (51 ; 52).

**5.** Appareil selon l'une au moins des revendications précédentes,
**caractérisé en ce que** la largeur des éléments formant capteur est plus petite que la largeur des corps éclairants (51a).

**6.** Appareil selon l'une au moins des revendications précédentes,
**caractérisé en ce que** le dispositif de commande (54) active chaque fois un segment continu (51b) de corps éclairants (51a), dont la longueur correspond sensiblement à un diamètre de consigne ($D_{soll}$), pré-établi, de l'objet en forme de tige (28), et le dispositif d'évaluation (54) détermine le diamètre réel ($D_{ist}$) de l'objet en forme de tige à l'aide des signaux issus des éléments formant capteur se trouvant sous l'ombre de l'objet en forme de tige (28) et en tenant compte du diamètre de consigne ($D_{soll}$) pré-établi.

**7.** Appareil selon l'une au moins des revendications précédentes,
**caractérisé en ce que** le dispositif d'évaluation (54) détermine le diamètre réel ($D_{ist}$) de l'objet en forme de tige (28) à l'aide des signaux issus de ceux des éléments formant capteur, qui ne sont couverts que par l'ombre centrale (61) de l'objet en forme de tige (28).

**8.** Appareil selon l'une au moins des revendications précédentes,
**caractérisé en ce que** le dispositif de commande (54) excite les corps éclairants (51a) de telle manière que soit activé un segment continu (51b) de corps éclairants (51a), qui pour la modification de l'orientation angulaire de la trajectoire du faisceau de rayonnement (56) par rapport à l'objet en forme de tige (28), court le long de la rangée (51) des corps éclairants (51a), sous forme d'une lumière défilante.

**9.** Appareil selon la revendication 8,

**caractérisé en ce que** le dispositif d'évaluation (54) détermine, à l'aide des signaux issus des éléments formant capteur se trouvant sous l'ombre de l'objet en forme de tige (28), le degré d'ovalisation de l'objet en forme de tige (28).

10. Appareil selon la revendication 8 ou 9,
**caractérisé en ce que** le dispositif d'évaluation (54) présente un formateur de valeur moyenne, qui produit une valeur moyenne à partir de plusieurs valeurs mesurées du diamètre, dont chacune indique le diamètre ($D_{ist}$) de l'objet en forme de tige (28) sous une orientation angulaire différente de la trajectoire du faisceau de rayonnement.

11. Appareil selon l'une au moins des revendications 8 à 10 pour la mesure simultanée du diamètre d'au moins deux objets en forme de tige, comprenant au moins deux systèmes de mesure optiques, de préférence placés sensiblement l'un à côté de l'autre, dont chacun est prévu pour mesurer le diamètre d'un objet en forme de tige.

12. Appareil selon l'une au moins des revendications précédentes,
**caractérisé en ce que** les corps éclairants (51a) sont séparés optiquement, par un écran (53), d'éléments formant capteur qui leurs sont voisins.

13. Appareil selon la revendication 4 et la revendication 12,
**caractérisé en ce que** l'écran est réalisé sous forme d'un écran troué (53), disposé entre la rangée (51) des corps éclairants (51a) et la rangée (52) des éléments formant capteur, et présentant une ouverture dans laquelle l'objet en forme de tige (28) peut être mis en place.

14. Appareil selon l'une au moins des revendications précédentes,
**caractérisé en ce que** la trajectoire du faisceau de rayonnement (56) est orientée sensiblement à angle droit par rapport à la dimension longitudinale de l'objet en forme de tige (28).

15. Appareil selon l'une au moins des revendications précédentes,
**caractérisé en ce que** les corps éclairants (51a) sont des diodes luminescentes.

16. Appareil selon l'une au moins des revendications précédentes,
**caractérisé en ce que** les éléments formant capteur, photosensibles, sont des éléments de dispositif à couplage de charges.

Fig. 1

Fig. 2 $a$

Fig. 2 $b$

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2729576 A1
- EP 0909537 A1
- DE 19523273 A1